# EUROPÄISCHE PATENTSCHRIFT

(11) **EP 3 945 238 B1**
(45) Veröffentlichungstag und Bekanntmachung des Hinweises auf die Patenterteilung: **02.11.2022**
(21) Anmeldenummer: 20188693.4
(22) Anmeldetag: 30.07.2020
(51) Int. Cl.: F16P 3/14

(54) **ÜBERWACHUNGSEINRICHTUNG UND VERFAHREN ZUM BETRIEB EINER ÜBERWACHUNGSEINRICHTUNG**
MONITORING DEVICE AND METHOD FOR OPERATING SAME
DISPOSITIF DE SURVEILLANCE ET PROCÉDÉ DE FONCTIONNEMENT D'UN DISPOSITIF DE SURVEILLANCE

(43) Veröffentlichungstag der Anmeldung: 02.02.2022
(73) Patentinhaber: Leuze electronic GmbH + Co. KG, 73277 Owen/Teck (DE)
(72) Erfinder: Jüttner, Andreas, 81543 München (DE); Eder, Alexander, 86928 Hofstetten (DE); Rohbeck, Volker, 85244 Röhrmoos (DE); Feller, Bernhard, 86316 Friedberg (DE); Mielchen, Alexander, 72768 Reutlingen (DE)
(74) Vertreter: Ruckh, Rainer Gerhard

(56) Entgegenhaltungen:
- EP-A1- 3 330 740
- EP-A1- 3 587 894
- DE-A1- 4 210 661
- US-B1- 10 503 143

## Beschreibung

Die Erfindung betrifft eine Überwachungseinrichtung und ein Verfahren zum Betrieb einer Überwachungseinrichtung.

Derartige Überwachungseinrichtungen können zur Sicherung von Gefahrenbereichen an Maschinen oder Anlagen vorgesehen sein, wobei dort ein Gefahrenbereich, in welchem von der Maschine oder Anlage gefahrbringende Bewegungen ausgeführt werden, abzusichern ist.

Weiterhin können derartige Überwachungseinrichtungen zur Sicherung des Vorfelds an Fahrzeugen eingesetzt werden, um einen Kollisionsschutz für das Fahrzeug zu realisieren.

In beiden Fällen ist es bekannt, Sensoren, insbesondere distanzmessende optische Sensoren zur Überwachung von Gefahrenbereichen einzusetzen, wobei diese beispielsweise als Flächendistanzsensor, das heißt als scannende Distanzsensoren, ausgebildet sein können.

Zur Anpassung an verschiedene beziehungsweise sich ändernde Gefahrenbereiche ist es bekannt, dass im optischen Sensor unterschiedliche Schutzfelder gespeichert sind. Je nach Gefahrensituation wird im optischen Sensor ein Schutzfeld aktiviert, sodass innerhalb dieses vorgegebenen Schutzfelds eine Objektüberwachung erfolgt.

Im optischen Sensor wird dann abhängig davon, ob im vorgegebenen Schutzfeld ein Objekt detektiert wird, ein binäres Schaltsignal mit einem entsprechenden Schaltzustand "Objekt vorhanden" ein, wird eine Sicherheitsfunktion ausgelöst, wodurch ein sicherer Betriebszustand herbeigeführt wird, der Gefährdungen von Personen vermeidet. Bei der Überwachung einer gefahrbringenden stationären Maschine oder Anlage kann die Sicherheitsfunktion darin bestehen, die Maschine oder Anlage stillzusetzen. Bei der Überwachung eines Fahrzeugs kann die Sicherheitsfunktion darin bestehen, das Fahrzeug anzuhalten.

Bei derartigen Überwachungseinrichtungen besteht die Aufgabe generell darin, die Schutzfelder an den aktuellen Bewegungszustand eines beweglichen Teils einer Maschine oder Anlage oder an den Bewegungszustand eines Fahrzeugs anzupassen, um so eine optimal angepasste Gefahrenbereichsüberwachung realisieren zu können.

Problematisch hierbei ist, dass der aktuelle Bewegungszustand nicht nur genau sondern auch hinreichend sicher bestimmt werden muss, damit die Sicherheit der Gefahrenbereichsüberwachung stets gewährleistet ist.

Die DE 42 10 661 A1 betrifft ein Verfahren und Anordnung zur Absicherung eines gefahrbringenden Bereichs. Um einen gefahrbringenden Bereich gegen ein unzulässiges Betreten abzusichern, werden Sensoren und berührungslos wirkende Schutzeinrichtungen, die im Eingangsbereich angeordnet sind, derart verschaltet, dass bei einer nicht zulässigen Signalfolge ein Abschalten von in dem Bereich wirkenden Einrichtungen erfolgt.

Die EP 3 587 894 A1 betrifft eine Sensoranordnung mit einem optischen Sensor zur Überwachung eines Gefahrenbereichs an einem Fahrzeug, welches entlang einer zu beiden Seiten jeweils durch eine Fahrbahnbegrenzung begrenzten Fahrbahn bewegt ist. Der optische Sensor ist ausgebildet, Objekte in wenigstens einem Schutzfeld zu erfassen und abhängig hiervon ein binäres Schaltsignal zu generieren, dessen Schaltzustände einerseits ein Sicherheitssignal und andererseits ein Freigabesignal für das Fahrzeug sind. Mehrere gleichzeitig aktivierte Schutzfelder sind vorgesehen. In jedem aktivierten Schutzfeld erfolgt mittels des optischen Sensors eine Objektdetektion. In einer Auswerteeinheit des optischen Sensors ist eine Auswahllogik vorgesehen, in welcher wenigstens ein aktiviertes Schutzfeld ausgewählt wird. Nur in Abhängigkeit einer Objekterkennung in einem oder mehreren der ausgewählten Schutzfelder wird das Sicherheitssignal generiert.

Die EP 3 330 740 A1 betrifft ein Verfahren zur Erfassung von Objekten in einem Erfassungsbereich und umfasst einen optischen Sensor mit einer Sensorsignale generierenden Sensoreinheit und eine Auswerteeinheit, in welcher die Sensorsignale ausgewertet werden. In der Auswerteeinheit ist ein innerhalb des Erfassungsbereichs liegendes, von einer Schutzfeldgrenze begrenztes Schutzfeld vorgegeben. In der Auswerteeinheit wird ein Objektfeststellungssignal generiert, wenn anhand der Sensorsignale ein Eindringen eines unzulässigen Objekts in das Schutzfeld registriert wird. Bei Erfassen des Eindringens einer zulässigen Objektstruktur wird über einen Teil der Schutzfeldgrenze in das Schutzfeld mittels der Sensoreinheit in der Auswerteeinheit dieser Teil der Schutzfeldgrenze durch die Kontur der zulässigen Objektstruktur ersetzt.

Die US 10 503 143 B1 betrifft ein Überwachungssystem für eine mobile Einheit, die sich in mehreren Sicherheitszonen bewegen kann. Anhand von mit Sensoren generierten Sensordaten wird die mobile Einheit von Personen unterschieden.

Der Erfindung liegt die Aufgabe zugrunde eine Überwachungseinrichtung der eingangsgenannten Art bereitzustellen, mittels derer eine verbesserte Sicherung von Gefahrenbereichen ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sensor, mittels dessen eine Objektüberwachung in einem Schutzfeld durchgeführt ist. Der Sensor ist einer mittels eines Antriebs angetriebenen, beweglichen Einheit zugeordnet. Mittels erste Sensormittel ist eine inkrementelle Wegerfassung dadurch durchgeführt, indem wiederkehrend in den Erfassungsbereich der Sensormittel geführte Markierungselemente eines Antriebsstrangs des Antriebs detektiert werden. Mittels zweite Sensormittel wird eine absolute Referenz für die inkrementelle Wegerfassung generiert. Abhängig von der mit den ersten und zweiten Sensormitteln durchgeführten Wegerfassung ist eine Schutzfeldbeeinflussung durchführbar.

Die Erfindung betrifft weiterhin ein entsprechendes Verfahren.

Die Grundfunktion der erfindungsgemäßen Überwachungseinrichtung besteht darin, mit dem Sensor eine Schutzfeldüberwachung durchzuführen, wodurch ein Gefahrenbereich abgesichert wird, um insbesondere Gefährdungen von Personen zu vermeiden.

Erfindungsgemäß ist der Sensor einer beweglichen Einheit zugeordnet, die mittels eines Antriebs angetrieben wird.

Die bewegliche Einheit kann von einem Fahrzeug wie zum Beispiel einem fahrerlosen Transportfahrzeug gebildet sein. Dann wird mit dem Sensor das Vorfeld des Fahrzeugs überwacht.

Weiterhin kann die bewegliche Einheit von einem beweglichen Teil einer Maschine gebildet sein, wobei der Begriff auch Anlagen aller Art und auch Roboter umfasst. In diesem Fall wird mit dem Sensor ein Bereich überwacht, der diesem beweglichen Teil räumlich zugeordnet ist.

In jedem Fall erfolgt die Absicherung eines Gefahrenbereichs durch die Überwachung eines Schutzfeldes mittels des Sensors.

Zur Durchführung der Schutzfeldüberwachung ist vorteilhaft eine dem Sensor zugeordnete Auswerteeinheit vorgesehen, die im optischen Sensor integriert sein kann oder eine externe Einheit bilden kann.

Die externe Einheit kann eine Steuerung sein, die die bewegliche Einheit steuert.

Generell wird in der Auswerteeinheit abhängig von Sensorsignalen des optischen Sensors ein Schaltsignal generiert, dessen Schaltzustände angeben ob sich ein Objekt im Schutzfeld befindet oder nicht.

Bei einer Objektdetektion im Schutzfeld wird eine Sicherheitsfunktion ausgelöst.

Die Sicherheitsfunktion kann dadurch ausgebildet sein, dass die zu überwachende Anlage oder Maschine stillgesetzt wird. Bei einer Vorfeldüberwachung eines Fahrzeugs besteht die Sicherheitsfunktion darin, das Fahrzeug anzuhalten.

Erfindungsgemäß wird mittels geeigneten Sensormitteln eine Wegerfassung durchgeführt, so dass abhängig von der erfassten Position der beweglichen Einheit eine Schutzfeldbeeinflussung durchgeführt wird. Durch diese Schutzfeldbeeinflussung wird die Schutzfeldüberwachung fortlaufend an die Position der beweglichen Einheit angepasst, wodurch die Schutzfeldüberwachung optimiert und an die bewegliche Einheit exakt angepasst ist, wodurch eine höhere Sicherheit bei der Gefahrenbereichsüberwachung erzielt wird.

Wesentlich hierbei ist, dass mit den Sensormitteln eine sichere und gleichzeitig zuverlässige Wegerfassung durchgeführt ist.

Erfindungsgemäß erfolgt hierbei mit ersten Sensormitteln eine inkrementelle Wegerfassung dadurch, dass an einem Antriebsstrang des Antriebs der beweglichen Einheit angeordnete Markierungselemente erfasst werden. Da die Bewegung des Antriebstrangs unmittelbar die Bewegung der beweglichen Einheit vorgibt, erfolgt somit eine direkte und genaue inkrementelle Wegerfassung.

Weiterhin erfolgt erfindungsgemäß durch eine Referenzierung auf einen absoluten Bezugspunkt eine Absolutpositionsbestimmung der beweglichen Einheit, die eine auf eine solche Absolutposition bezogene Schutzfeldbeeinflussung ermöglicht. Hierfür sind zweite Sensormittel vorgesehen, mittels derer vorteilhaft Referenzelemente an einer nicht bewegten Umgebung erfasst werden.

Dadurch wird die Sicherheit und Zuverlässigkeit der Gefahrenbereichsüberwachung erheblich erhöht, da die Schutzfeldbeeinflussung exakt auf die aktuelle Position der beweglichen Einheit bezogen ist.

Dabei ist vorteilhaft als Schutzfeldbeeinflussung eine Änderung der Größe und/oder Form des Schutzfeldes vorgesehen.

Mit der Anpassung des Schutzfeldes kann insbesondere auf sich ändernde Umgebungsbedingungen reagiert werden.

Weiter vorteilhaft kann als Schutzfeldbeeinflussung eine Schutzfeldabschaltung vorgesehen sein.

Eine Schutzfeldabschaltung wird insbesondere dann durchgeführt, wenn sich die bewegliche Einheit in einer Position befindet, in welcher von dieser keine Gefahren für Personen ausgehen kann.

Die erfindungsgemäße Überwachungseinrichtung bildet vorteilhaft ein Sicherheitssystem, das die Sicherheitsanforderungen für einen Einsatz in sicherheitsrelevanten Applikationen, insbesondere im Bereich des Personenschutzes erfüllt.

Die Komponenten des Sicherheitssystems weisen hierzu einen fehlersicheren Aufbau auf. Dies wird insbesondere durch einen redundanten, mehrkanaligen Aufbau der Auswerteeinheit des Sensors erreicht, so dass der Sensor einen Sicherheitssensor bildet.

Die Überwachungseinrichtung umfasst vorteilhaft eine Steuerung, die insbesondere zur Steuerung der mit dem Sensor überwachten Maschine oder Anlage dient. Die Steuerung ist dann als Sicherheitssteuerung ausgebildet und weist ebenfalls einen redundanten, mehrkanaligen Aufbau auf.

Der Sensor kann als optischer Sensor oder Radarsensor ausgebildet sein.

Gemäß einer vorteilhaften Ausführungsform ist der optische Sensor ein Flächendistanzsensor oder ein Lichtvorhang.

Gemäß vorteilhaften Ausgestaltungen sind die ersten und zweiten Sensormittel in Form von optischen, magnetischen, induktiven oder kapazitiven Sensormitteln ausgebildet.

Mit den so ausgebildeten Sensormitteln können die jeweiligen Markierungselemente und Referenzelemente berührungslos erfasst werden.

Gemäß einer vorteilhaften Ausgestaltung weisen die Markierungselemente eine Folge von Geometriestrukturelementen und/oder Materialstrukturelementen auf, die mittels den ersten Sensormitteln seriell erfasst werden.

Dabei sind vorteilhaft die Markierungselemente und/oder die ersten Sensormittel für eine Richtungserkennung der beweglichen Einheit ausgebildet.

Gemäß einer weiteren vorteilhaften Ausgestaltung weisen die Referenzelemente eine Folge von Geometriestrukturelementen und/oder Materialstrukturelementen auf, die mittels den zweiten Sensormitteln seriell erfasst werden. Dabei sind vorteilhaft die Referenzelemente und/oder die zweiten Sensormittel für eine Richtungserkennung der beweglichen Einheit ausgebildet.

Damit kann eine Schutzfeldbeeinflussung nicht nur abhängig von den aktuellen Positionen der beweglichen Einheit sondern auch abhängig von deren Bewegungsrichtung erfolgen, wodurch die Funktionalität der Überwachungseinrichtung erweitert ist.

Die Richtungserkennung kann vorteilhaft dadurch erfolgen, dass die Folgen der Geometriestrukturelemente und/oder Materialstrukturelemente eine definierte Ortsabhängigkeit aufweisen.

Besonders vorteilhaft weisen die ersten und/oder zweiten Sensormittel jeweils wenigstens zwei in Bewegungsrichtung der beweglichen Einheit hintereinander angeordnete Sensorelemente auf.

Dann kann anhand der Folge der Sensorsignale der Sensorelemente eines Sensormittels die Richtungserkennung erfolgen.

Gemäß einer vorteilhaften Ausführungsform generieren die ersten und/oder zweiten Sensormittel pulsförmige Sensorsignale.

Durch Auswertung von pulsförmigen Sensorsignalen lässt sich besonders einfach eine Richtungserkennung durchführen.

Weiterhin kann dann anhand von Sensorsignalen der ersten Sensormittel die Geschwindigkeit der beweglichen Einheit ermittelt wird.

Schließlich kann anhand von Sensorsignalen der ersten und/oder zweiten Sensormittel eine Fehlerkontrolle durchgeführt werden.

In diesem Fall kann der Zeitversatz pulsförmiger Sensorelemente eines Sensormittels überwacht werden.

Die Erfindung wird im Folgenden anhand der Zeichnungen erläutert. Es zeigen:
- Figur 1:: Erstes Ausführungsbeispiel eines Sensors der erfindungsgemäßen Überwachungseinrichtung.
- Figur 2:: Zweites Ausführungsbeispiel eines Sensors der erfindungsgemäßen Überwachungseinrichtung.
- Figur 3:: Drittes Ausführungsbeispiel eines Sensors der erfindungsgemäßen Überwachungseinrichtung.
- Figuren 4a, b:: Erstes Ausführungsbeispiel der erfindungsgemäßen Überwachungseinrichtung mit einem einen optischen Sensor aufweisenden Fahrzeug in unterschiedlichen Abständen zu einer Be- und Entladestation.
- Figuren 5a - d:: Unterschiedliche Sensorkonfigurationen für eine inkrementelle Wegerfassung bei der Überwachungseinrichtung gemäß den Figuren 4a, 4b.
- Figur 5e:: Beispiel einer Geschwindigkeits-/Wegerfassung mit Radar-, Schall-, Optikwellen.
- Figuren 6a, b:: Zeitabhängige Signalverläufe für die Sensorkonfiguration gemäß Figur 5b.
- Figur 7:: Zeitabhängige Signalverläufe für die Sensorkonfiguration gemäß Figur 5c.
- Figuren 8a, b:: Zeitabhängige Signalverläufe für die Sensorkonfiguration gemäß Figur 5d.
- Figuren 9a - g:: Unterschiedliche Markierungselemente für eine inkrementelle Wegerfassung für die Überwachungseinrichtung gemäß den Figuren 4a, 4b.
- Figuren 10a - d:: Unterschiedliche Referenzelemente für die Überwachungseinrichtung gemäß den Figuren 4a, 4b.
- Figur 11:: Zweites Ausführungsbeispiel der erfindungsgemäßen Überwachungseinrichtung.

- Figur 12:: Beispiel von Markierungselementen für eine inkrementelle Wegerfassung bei der Überwachungseinrichtung gemäß Figur 10.
- Figur 13:: Drittes Ausführungsbeispiel der erfindungsgemäßen Überwachungseinrichtung a) in einer Seitenansicht b) in einer Draufsicht von oben
- Figur 14:: Erste Variante des Ausführungsbeispiels gemäß Figur 12.
- Figur 15:: Zweite Variante des Ausführungsbeispiels gemäß Figur 12.
- Figur 16:: Dritte Variante des Ausführungsbeispiels gemäß Figur 12.

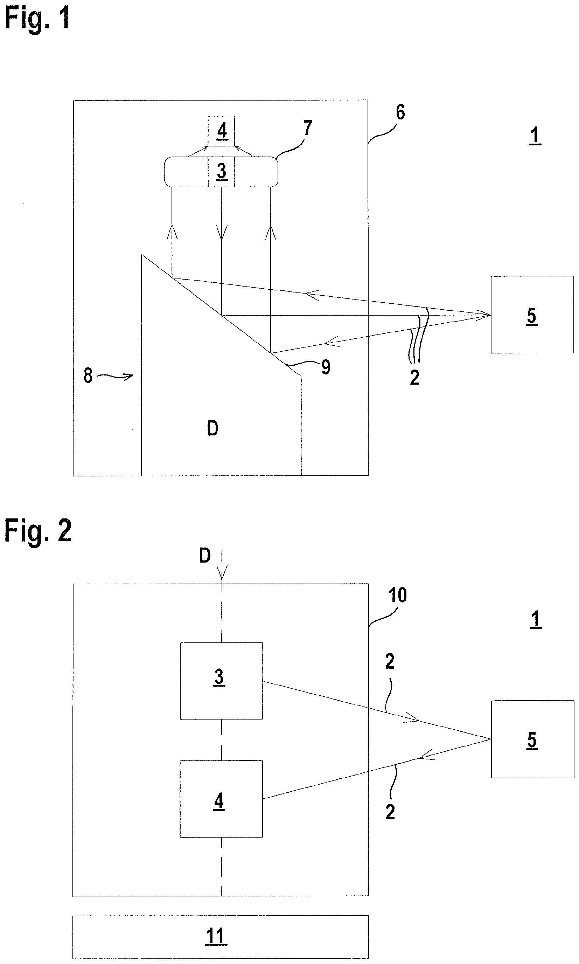

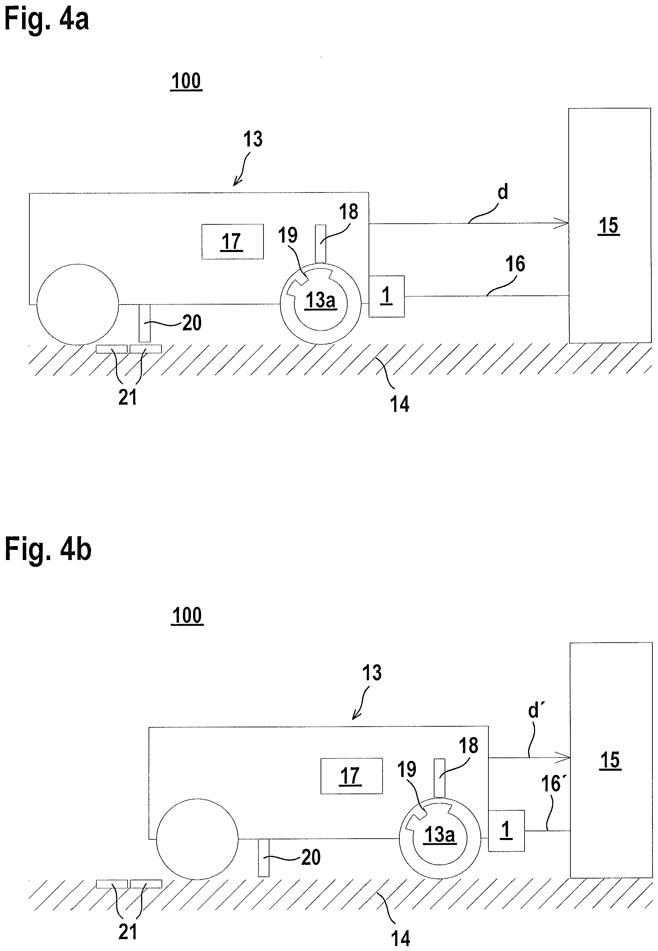

Die Figuren 1 bis 3 zeigen Beispiele eines Sensors 1 für eine Überwachungseinrichtung 100, wie sie in den Figuren 4a, 4b und 10 bis 15 exemplarisch dargestellt ist.

Prinzipiell können die Sensoren 1 als Radarsensoren ausgebildet sein. In den Figuren 1 bis 3 sind Sensoren 1 in Form von optischen Sensoren dargestellt.

Figur 1 zeigt ein Ausführungsbeispiel eines optischen Sensors in Form eines Flächendistanzsensors, das heißt eines scannenden Distanzsensors. Zur Durchführung von Distanzmessungen weist der optische Sensor einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor für die Distanzbestimmungen ausgewertet wird.

Wie Figur 1 zeigt, sind die Sensorkomponenten der optischen Sensoren in einem Gehäuse 6 integriert, wobei der Sender 3 sowie der Empfänger 4 mit einer vorgeordneten Empfangsoptik 7 stationär im Gehäuse 6 angeordnet sind. Mit dem optischen Sensor erfolgt eine Objektdetektion in einem flächigen Erfassungsbereich dadurch, dass die Lichtstrahlen 2 mittels einer Ablenkeinheit 8 periodisch abgelenkt werden. Dabei überstreichen die Lichtstrahlen 2 innerhalb einer Periodendauer einen Erfassungsbereich. Die Ablenkeinheit 8 ist motorisch angetrieben und umfasst einen um eine Drehachse D drehbaren Umlenkspiegel 9, an dem die Lichtstrahlen 2 abgelenkt werden.

Figur 2 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

Generell ist jedem optischen Sensor eine nicht dargestellte Auswerteeinheit zugeordnet, in der die Empfangssignale des Empfängers 4 ausgewertet werden.

Für den Einsatz im Bereich der Sicherheitstechnik sind die optischen Sensoren gemäß der Figuren 1 und 2 als Sicherheitssensoren ausgebildet und weisen einen fehlersicheren Aufbau auf, der beispielsweise durch eine redundante Auswerteeinheit in Form zweier sich zyklisch gegenseitig überwachender Rechnereinheiten realisiert werden kann.

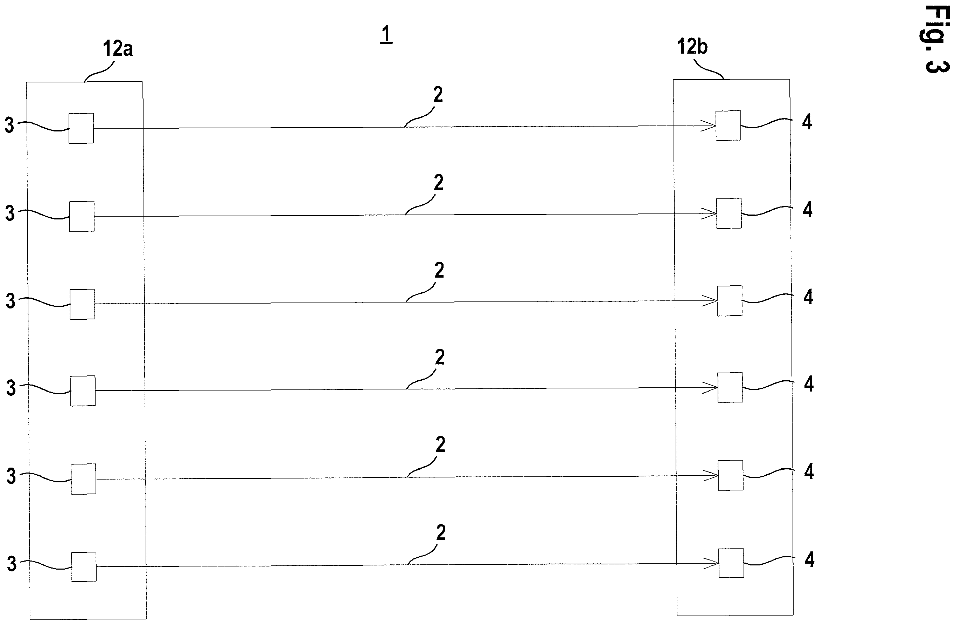

Figur 3 zeigt ein Beispiel eines Sensors 1 in Form eines Lichtvorhangs.

Der Lichtvorhang weist in einem ersten Gehäuse 12a eine Reihenanordnung von Lichtstrahlen 2 emittierenden Sendern 3 und in einem zweiten Gehäuse 12b eine Reihenanordnung von Empfängern 4 auf. Die Lichtstrahlen 2 spannen einen flächigen Überwachungsbereich auf, der in einer vertikalen Ebene orientiert ist.

Die Sender 3 werden einzeln nacheinander zyklisch mittels einer nicht dargestellten Sendersteuerung aktiviert. Die Empfänger 4 werden in bekannter Weise optisch auf die Sender 3 synchronisiert.

Die in den Empfängern 4 generierten Empfangssignale werden in einer nicht dargestellten Auswerteeinheit zur Generierung eines binären Schaltsignals ausgewertet. Die Schaltzustände des Schaltsignals geben an, ob sich ein Objekt 5 im Überwachungsbereich befindet oder nicht. Bei freiem Überwachungsbereich treffen die Lichtstrahlen 2 aller Sender 3 ungehindert auf den zugeordneten Empfänger 4. Bei einem Objekteingriff im Überwachungsbereich werden durch das Objekt 5 die Lichtstrahlen 2 wenigstens eines Senders 3 unterbrochen. Zur Erfüllung der sicherheitstechnischen Anforderungen wiest die Auswerteeinheit einen redundanten, vorzugsweise zweikanaligen Aufbau auf.

Die Figuren 4a, 4b zeigen ein erstes Ausführungsbeispiel der erfindungsgemäßen Überwachungseinrichtung 100. Dort wird ein Fahrzeug 13 als bewegliche Einheit auf einem stationären Untergrund 14, im vorliegenden Fall einem Boden einer Fabrikhalle bewegt und auf eine Be- und Entladestation 15 zubewegt, beziehungsweise von dieser wegbewegt.

An der Frontseite des Fahrzeugs 13 ist ein Sensor 1 in Form eines Flächendistanzsensors angeordnet, mit dem das Vorfeld des Fahrzeugs 13 überwacht wird. Dabei erfolgt mit dem Flächendistanzsensor eine Überwachung eines Schutzfeldes 16, 16'. Dringt ein Objekt 5 in das Schutzfeld 16, 16' ein, wird ein binäres Schaltsignal mit einem Schaltzustand generiert, das zur Auslösung einer Sicherheitsfunktion führt. Im vorliegenden Fall wird das Schaltsignal an die Steuerung 17 des Fahrzeugs 13 ausgegeben. Die Sicherheitsfunktion ist dadurch gebildet, dass das Fahrzeug 13 angehalten wird.

Wie die Figuren 4a, 4b zeigen, ist die Schutzfeldgröße abhängig vom Abstand d, d' des Fahrzeugs 13 zur Be- und Entladestation 15. Dabei ist das Schutzfeld 16, 16' so bemessen, dass die Be- und Entladestation 15 nicht in das Schutzfeld 16, 16' ragt und so nicht zum Auslösen der Sicherheitsfunktion führt.

Zur Realisierung dieser Schutzfeldanpassung sind Mittel zur Wegerfassung des Fahrzeugs 13 vorgesehen.

Dabei sind erste Sensormittel 18 vorgesehen, mittels derer an einem Antriebsstrang des Antriebs des Fahrzeugs 13 Markierungselemente 19 erfasst werden. Durch die Bewegung des Antriebsstrangs werden die Markierungselemente 19 wiederkehrend in den Erfassungsbereich der ersten Sensormittel 18 geführt und von diesen detektiert.

Bei dem Ausführungsbeispiel der Figuren 4a, 4b ist der Antriebsstrang von der Antriebsachse 13a der angetriebenen Vorderräder des Fahrzeugs 13 gebildet. Im Bereich eines Vorderrads sind die Markierungselemente 19 angeordnet, die mit den ebenfalls dicht am Vorderrad angeordneten ersten Sensormitteln 18 erfasst werden können, wenn die Markierungselemente 19 durch die Drehbewegung der Antriebsachse 13a periodisch an diesen ersten Sensormitteln 18 vorbeibewegt werden.

Mit diesen ersten Sensormitteln 18 erfolgt eine inkrementelle Wegerfassung. Mittels einer Referenzierung auf eine Absolutposition wird diese auf eine absolute Wegerfassung erweitert. Diese Referenzierung erfolgt dadurch, dass mit zweiten Sensormitteln 20 stationäre Referenzelemente 21, die im vorliegenden Fall im Boden integriert sind, detektiert werden.

Abhängig von der mit den ersten Sensormitteln 18 und zweiten Sensormitteln 20 durchgeführten Wegerfassung erfolgt eine Schutzfeldbeeinflussung, die im vorliegenden Fall zu einer Anpassung der Schutzfeldgröße derart gebildet ist, dass das Schutzfeld 16, 16' so angepasst wird, dass es den kompletten Zwischenraum zwischen Fahrzeug 13 und Be-und Entladestation 15 abdeckt, diese jedoch nicht in das Schutzfeld 16, 16' ragt.

Generell sind die ersten und zweiten Sensormittel 18, 20 für eine berührungslose Erfassung der Markierungselemente 19 beziehungsweise Referenzelemente 21 ausgebildet.

Vorteilhaft sind die ersten und zweiten Sensormittel 18, 20 in Form von optischen, magnetischen, induktiven oder kapazitiven Sensormitteln 18, 20 ausgebildet.

Im vorliegenden Fall generieren die ersten und/oder zweiten Sensormittel 18, 20 pulsförmige Sensorsignale.

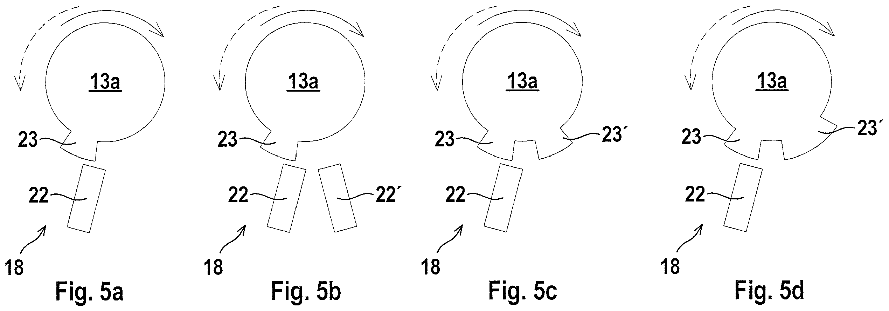

Die Figuren 5a bis 5d zeigen unterschiedliche Ausführungsformen von ersten Sensormitteln 18 und zugeordneten Markierungselementen 19, wobei dort die Pfeile die Drehrichtungen der Antriebsachse 13a zeigen.

Figur 5a zeigt eine Ausführungsform eines ersten Sensormittels 18 in Form eines einzelnen Sensorelements 22. Als Markierungselement 19 ist ein Geometriestrukturelement in Form eines einzelnen Nockens 23 vorgesehen.

Figur 5b zeigt eine Ausführungsform mit einem an der Antriebsachse 13a angeordneten Nocken 23 als Markierungselement 19. Diesem sind erste Sensormittel 18 in Form zweier versetzt angeordneter Sensorelemente 22, 22' zugeordnet.

Figur 5c zeigt eine Ausführungsform mit zwei identisch ausgebildeten Nocken 23, 23' als Markierungselementen 19, welchen erste Sensormittel 18 mit nur einem Sensorelement 22 zugeordnet sind.

Figur 5d zeigt eine Ausführungsform mit zwei unterschiedlich ausgebildeten Nocken 23, 23' als Markierungselementen 19, welchen ein erstes Sensormittel 18 mit einem Sensorelement 22 zugeordnet sind.

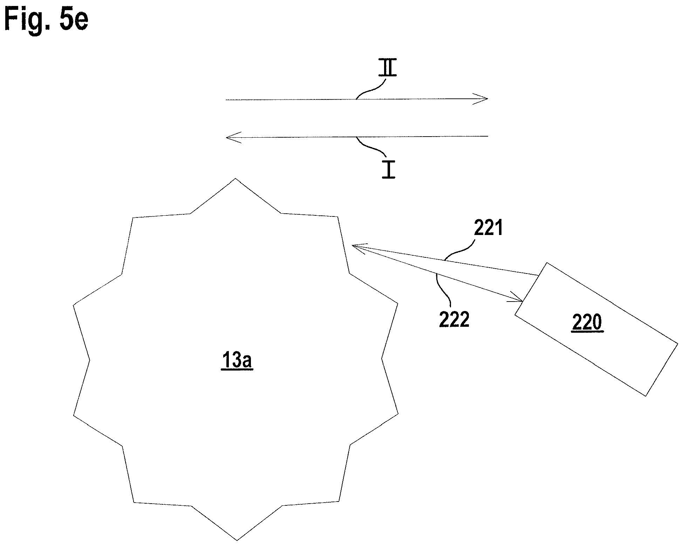

Die Figur 5e zeigt eine Sensoranordnung mit einem Ultraschallsensor 220 mit einer gesendeten Ultraschallwelle 221 mit einer ersten bestimmten Frequenz und einer empfangenden Ultraschallwelle 222 mit einer durch die Geschwindigkeit der Transporteinrichtung veränderten Frequenz. Aus der Frequenzänderung des empfangenen Signals können sowohl die Richtung als auch die Geschwindigkeit der Transporteinrichtung ermittelt werden. Durch Aufsummierung der Geschwindigkeitswerte können Weginformationen gewonnen werden. (I, II bezeichnen die möglichen Drehrichtungen der Antriebsachse 13a, die senkrecht zur Bildebene steht.) Anstelle eines Ultraschallsensors 220 kann auch ein Radarsensor eingesetzt werden.

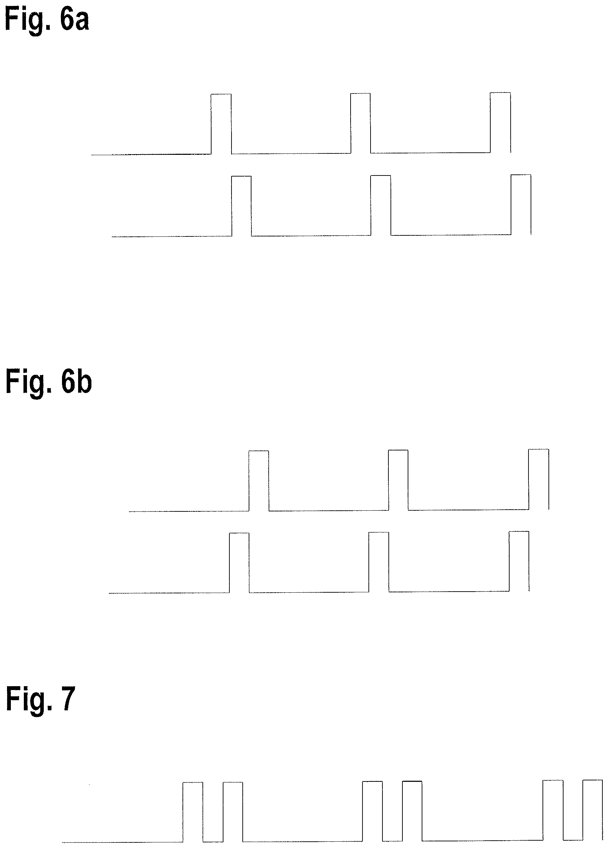

Die Figuren 6a, 6b zeigen Zeitdiagramme der Sensorsignale der beiden Sensorelemente 22, 22' der Anordnung gemäß Figur 5b. Durch die versetzte Anordnung der Sensorelemente 22, 22' sind auch deren pulsförmige Sensorsignale zeitlich versetzt. In den Figuren 6a, 6b zeigt das jeweils obere Diagramm die Sensorsignale des Sensorelements 22 und das jeweils untere Diagramm die Sensorsignale des Sensorelements 22'. Figur 6a zeigt Diagramme für eine erste Drehrichtung der Antriebsachse 13a, Figur 6b zeigt Diagramme für die zweite Drehrichtung der Antriebsachse 13a.

Wie aus dem Vergleich der Figuren 6a, 6b folgt, liefern die Sensorsignale nicht nur inkrementelle Weginformationen. Weiterhin kann aus dem Zeitversatz der Sensorsignale der Sensorelemente 22, 22' die Bewegungsrichtung der Antriebsachse 13a und damit des Fahrzeugs 13 bestimmt werden. Aus den zeitlichen Abständen der Pulse der pulsförmigen Sensorsignale kann die Geschwindigkeit des Fahrzeugs 13 ermittelt werden.

Durch Überwachung von zeitlichen Abständen oder zeitlicher Verhältnisse und/oder zeitlicher Erwartungshaltungen an Pulsbreiten zum Beispiel zur Periode oder zeitlichen Abständen zum Beispiel im Verhältnis zur Periode der Sensorsignale, können Fehler (zum Beispiel Kurzschluss oder Oszillationen) in den Sensorelementen 22, 22' aufgedeckt werden.

Figur 7 zeigt das Zeitdiagramm der Sensorsignale des Sensorelements 22 der Anordnung gemäß Figur 5c.

Entsprechend den Figuren 6a, 6b kann auch aus diesem Signalverlauf der Sensorsignale gemäß Figur 7 aus der Anzahl der Pulse der Transportweg und aus den Abständen der Pulse die Geschwindigkeit des Fahrzeugs 13 bestimmt werden.

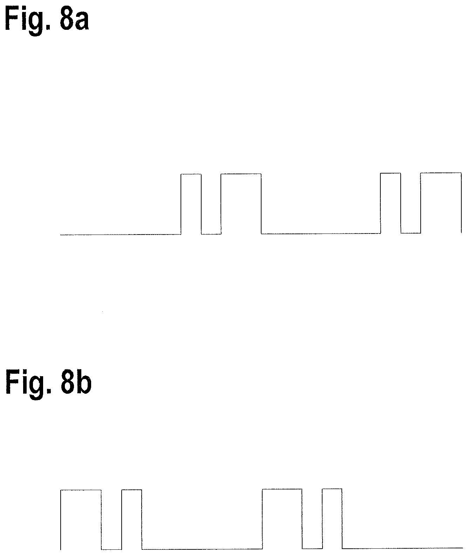

Die Figuren 8a, 8b zeigen die Zeitdiagramme des Sensorelements 22 gemäß Figur 5d für die beiden Drehrichtungen. Da die Nocken 23, 23' unterschiedlich sind, liefern diese auch unterschiedliche Sensorsignale. Daher ist analog zur Ausführungsform der Figuren 6a, 6b zusätzlich zu einer Weg- und Geschwindigkeitsbestimmung auch eine Richtungserkennung möglich.

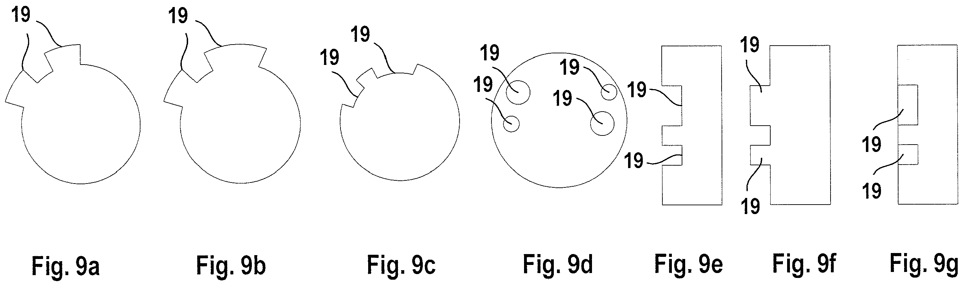

Die Figuren 9a bis 9g zeigen unterschiedliche Ausführungsformen von Markierungselementen 19, wobei die Figuren 9a bis 9d eine Draufsicht auf den Vorderradbereich der Antriebsachse 13a zeigen, wogegen die Figuren 9e bis 9g Längsschnittdarstellungen zeigen.

Die Figuren 9a, 9b, 9f zeigen Geometriestrukturelemente ausbildende Markierungselemente 19 in Form von Erhebungen, während die Figuren 9c, 9d, 9e Markierungselemente 19 in Form von Vertiefungen zeigen. Figur 9g zeigt Markierungselemente 19 in Form von Materialstrukturelementen. Diese bilden lokale Bereiche mit anderen Materialeigenschaften als der umgebende Bereich, wobei diese Materialstrukturelemente mit den ersten Sensormitteln 18 erfasst werden können.

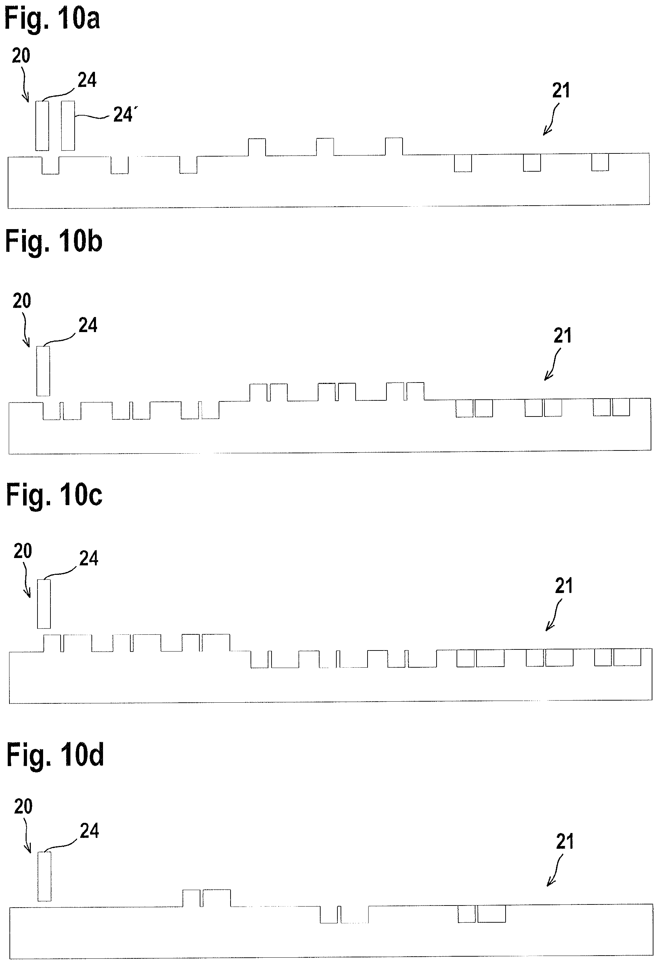

Die Figuren 10a bis 10d zeigen Ausführungsformen der im Boden integrierten Referenzelemente 21. Die Referenzelemente 21 sind als Geometriestrukturelemente in Form von Folgen von Erhebungen und Vertiefungen ausgebildet. Für die Schaffung einer Referenz für die Absolutposition des Fahrzeugs 13 werden diese Referenzelemente 21 von den zweiten Sensormitteln 20 abgetastet, die mehrere Sensorelemente 24, 24' (Figur 10a) oder nur ein Sensorelement 24 aufweisen können.

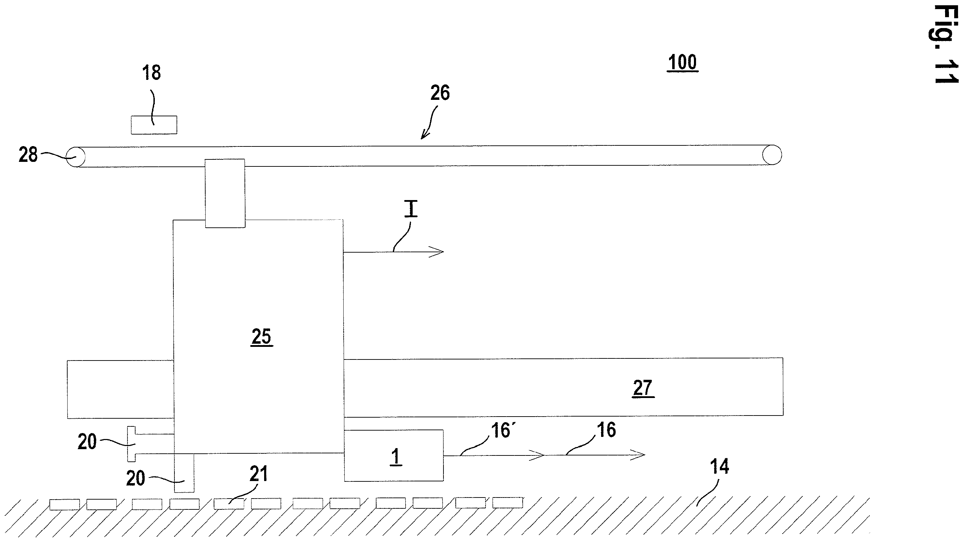

Figur 11 zeigt ein weiteres Ausführungsbeispiel der erfindungsgemäßen Überwachungseinrichtung 100. Im vorliegenden Fall wird mit dieser ein Gefahrenbereich um ein bewegliches Maschinenteil 25 herum abgesichert.

Das Maschinenteil 25 kann mittels eines Zahnriemenantriebs 26 entlang einer linearen Bahn 27 bewegt werden. Die Förderrichtung ist mit dem Pfeil I gekennzeichnet.

Dem mit einer Antriebswelle angetriebenen Rad 28 sind analog zur Ausführungsform gemäß den Figuren 4a, 4b Markierungselemente 19 zugeordnet, die mit ersten Sensormitteln 18 für eine inkrementelle Wegerfassung detektiert werden.

Weiterhin sind wieder zweite Sensormittel 20 zur Erfassung von Referenzelementen 21 auf dem Untergrund 14 vorgesehen, mittels derer eine Absolutreferenz für die mit den ersten Sensormitteln 18 ermittelten inkrementellen Weginformationen gewonnen wird.

An dem Maschinenteil 25 befindet sich ein Sensor 1 in Form eines Flächendistanzsensors. Mit diesem wird ein Schutzfeld 16, 16' überwacht. Wird mit dem Sensor 1 ein Objekteingriff im Schutzfeld 16, 16' registriert, wird eine Sicherheitsfunktion ausgelöst. Bevorzugt generiert der Sensor 1 ein Schaltsignal, das an die Steuerung 17 der Maschine ausgegeben wird, so dass das Maschinenteil 25 stillgesetzt wird.

Abhängig von der mit den ersten und zweiten Sensormitteln 18, 20 durchgeführten Wegerfassung wird die Größe des Schutzfeldes 16, 16' angepasst, wie in Figur 11 schematisch dargestellt.

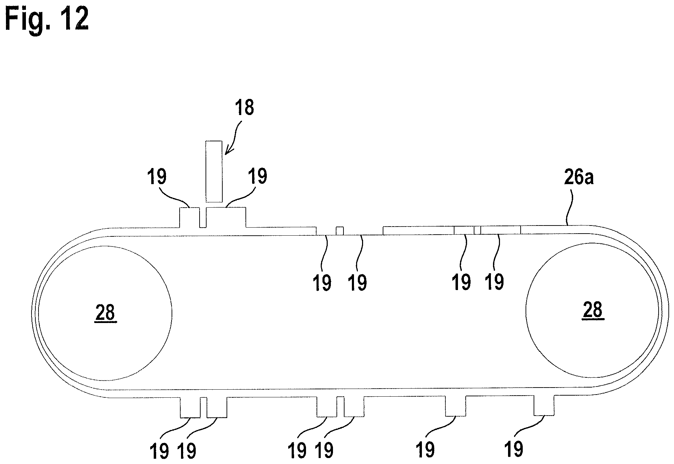

Figur 12 zeigt als Alternative zu einer Anordnung von Markierungselementen 19 an der Antriebswelle die Anordnung von Markierungselementen 19 an der Außenseite des Zahnriemens 26a des Zahnriemenantriebs 26. Diese Markierungselemente 19 sind wieder in Form von Geometriestrukturelementen, nämlich Erhebungen oder Aussparungen des Zahnriemens ausgebildet. Diese können mit ersten Sensormitteln 18 erfasst werden, wie in Figur 12 schematisch dargestellt.

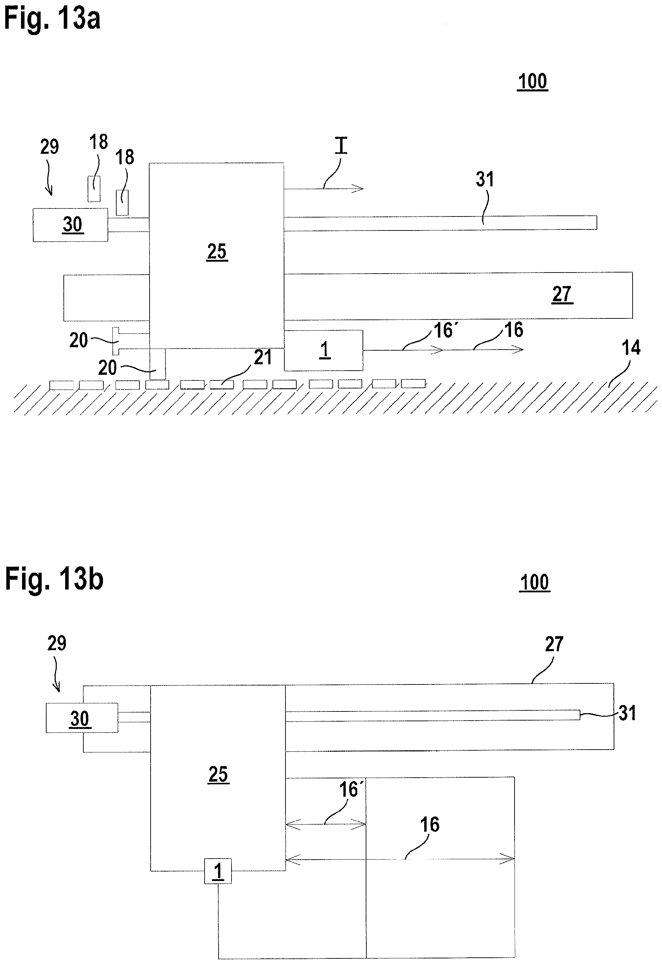

Die Figuren 13a, 13b zeigen eine Variante der Ausführungsform gemäß Figur 11. Diese Anordnung unterscheidet sich von der Ausführungsform gemäß Figur 11 dadurch, dass anstelle eines Zahnriemenantriebs 26 ein Spindelantrieb 29 vorgesehen ist, der eine von einem Antriebsmotor 30 angetriebene Spindel 31 aufweist, um das Maschinenteil 25 entlang der Bahn 27 linear zu bewegen.

An der Spindel 31 sind Markierungselemente 19 vorgesehen, die mit ersten Sensormitteln 18 zur inkrementelle Wegerfassung detektiert werden.

Entsprechend der Ausführungsform gemäß Figur 11 sind zweite Sensormittel 20 zur Erfassung der Referenzelemente 21 auf dem Untergrund 14 vorgesehen.

Abhängig von der mit den ersten und zweiten Sensormitteln 18, 20 durchgeführten Wegerfassung wird wieder die Größe des Schutzfeldes 16, 16' für den Sensor 1 vorgegeben.

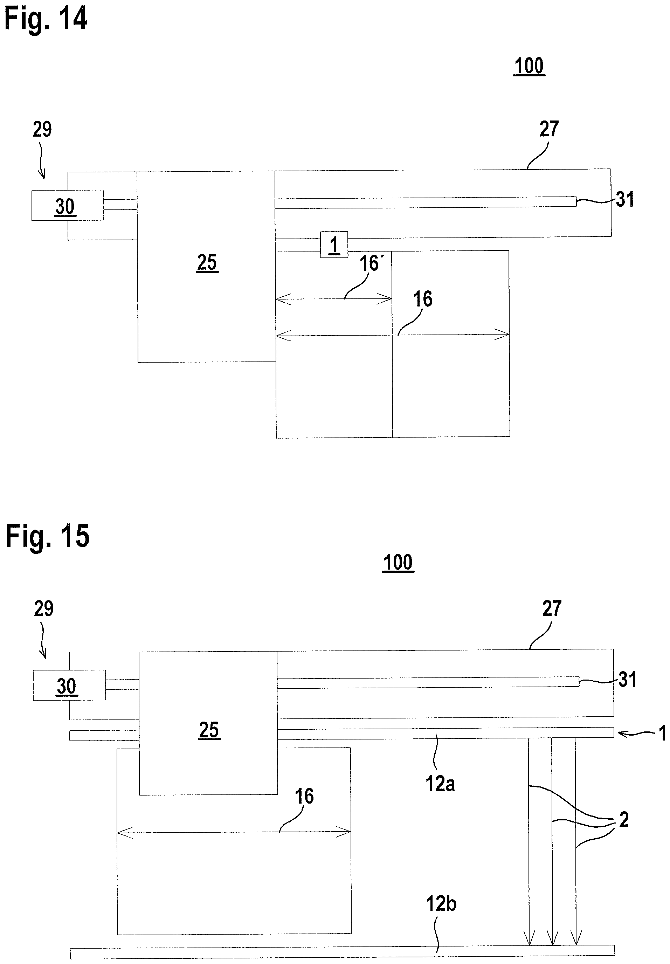

Diese Anordnung von ersten und zweiten Sensormitteln 18, 20 mit den zugeordneten Markierungselementen 19 und Referenzelementen 21 ist in identischer Form bei den in den Figuren 14 bis 16 dargestellten Varianten der Ausführungsform gemäß den Figuren 13a, 13b vorgesehen.

Bei der Ausführungsform gemäß Figur 14 befindet sich der als Flächendistanzsensor ausgebildete Sensor 1 an der Bahn 27, das heißt der Sensor 1 ist stationär angeordnet. Ansonsten entspricht die Ausführungsform gemäß Figur 14 der Ausführungsform der Figuren 13a, 13b. Auch in diesem Fall erfolgt abhängig von der Wegerfassung mit den ersten und zweiten Sensormitteln 18, 20 eine Vorgabe der Größe des Schutzfeldes 16, 16' für den Sensor 1.

Die Ausführungsform in Figur 15 unterscheidet sich von der Anordnung gemäß Figur 14 nur dadurch, dass als Sensor 1 ein stationär angeordneter Lichtvorhang vorgesehen ist, dessen Gehäuse 12a, 12b sich entlang der gesamten Bahn 27 erstrecken.

Abhängig von der mittels den ersten und zweiten Sensormitteln 18, 20 durchgeführten Wegerfassung wird an die Position des Maschinenteils 25 angepasst ein Schutzfeld 16 generiert, das einen Teilbereich des mit dem Lichtvorhang überwachten Überwachungsbereichs bildet. Vorzugsweise wandert das Schutzfeld 16 mit dem Maschinenteil 25 mit und sorgt so für eine Gefahrenbereichsabsicherung am Maschinenteil 25.

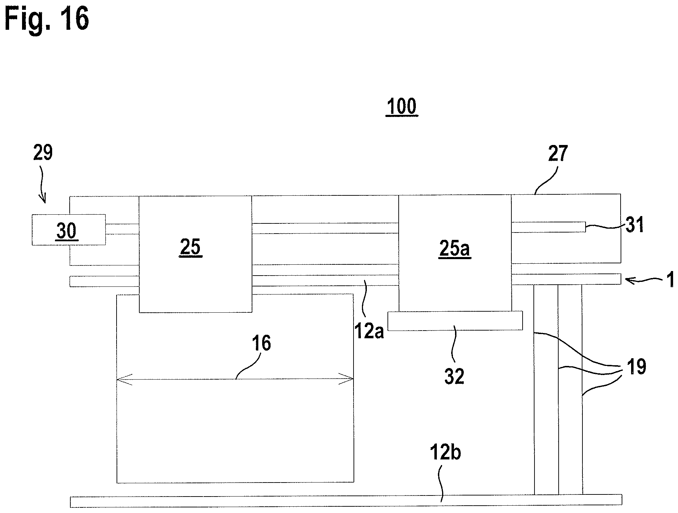

Figur 16 zeigt eine Erweiterung der Anordnung gemäß Figur 15 derart, dass eine mechanische Schutzeinrichtung 32 vorgesehen ist, mittels derer das Maschinenteil 25 in seiner Endposition 25a gesichert ist.

Analog zur Ausführungsform gemäß Figur 15 wird das Schutzfeld 16 entsprechend der Position des Maschinenteils 25 vorgegeben. In der mit der Schutzeinrichtung 32 gesicherten Endposition 25a wird jedoch das Schutzfeld 16 abgeschaltet.

### B ezugszei chenli ste

- (1): Sensor
- (2): Lichtstrahl
- (3): Sender
- (4): Empfänger
- (5): Objekt
- (6): Gehäuse
- (7): Empfangsoptik
- (8): Ablenkeinheit
- (9): Umlenkspiegel
- (10): Messkopf
- (11): Sockel
- (12a): Gehäuse
- (12b): Gehäuse
- (13): Fahrzeug
- (13a): Antriebsachse
- (14): Untergrund
- (15): Be- und Entladestation
- (16, 16'): Schutzfeld
- (17): Steuerung
- (18): Sensormittel
- (19): Markierungselement
- (20): Sensormittel
- (21): Referenzelement
- (22, 22'): Sensorelement
- (23, 23'): Nocken
- (24, 24'): Sensorelement
- (25): Maschinenteil
- (25a): Endposition
- (26): Zahnriemenantrieb
- (26a): Zahnriemen
- (27): Bahn
- (28): Rad
- (29): Spindelantrieb
- (30): Antriebsmotor
- (31): Spindel
- (32): Schutzeinrichtung
- (100): Überwachungseinrichtung
- (220): Ultraschallsensor
- (221): Ultraschallwelle
- (222): Ultraschallwelle

- D: Drehachse
- d, d': Abstand

## Patentansprüche

1. Überwachungseinrichtung (100) mit einem Sensor (1), mittels dessen eine Objektüberwachung in einem Schutzfeld (16, 16') durchgeführt ist, wobei der Sensor (1) einer mittels eines Antriebs angetriebenen, beweglichen Einheit zugeordnet ist, **dadurch gekennzeichnet, dass** erste Sensormittel (18) vorgesehen sind, mittels derer eine inkrementelle Wegerfassung dadurch durchgeführt ist, indem wiederkehrend in den Erfassungsbereich der Sensormittel (18) geführte Markierungselemente (19), die an einem Antriebsstrang des Antriebs angebracht sind, detektiert werden, dass zweite Sensormittel (20) vorgesehen sind, mittels derer eine absolute Referenz für die inkrementelle Wegerfassung generiert wird, und dass abhängig von der mit den ersten und zweiten Sensormitteln (18, 20) durchgeführten Wegerfassung eine Schutzfeldbeeinflussung durchführbar ist.

2. Überwachungseinrichtung (100) nach Anspruch 1, **dadurch gekennzeichnet, dass** eine Antriebswelle oder ein Antriebsstrang vorgesehen sind, und dass Sensormittel vorgesehen sind, mittels derer durch Erfassung von Markierungselementen (19) an der Antriebswelle oder an einem Antriebsstrang eines Fahrzeugs (13) oder Maschinenteils (25) eine Geschwindigkeit durch Ausnutzung des Dopplereffekts erfasst wird und/oder aus der gemessenen Geschwindigkeit ein Weg aufsummiert wird.

3. Überwachungseinrichtung (100) nach Anspruch 1 oder 2, **dadurch gekennzeichnet, dass** die absolute Referenz dadurch gebildet ist, dass mit den zweiten Sensormitteln (20) Referenzelemente (21) erfasst werden, die an einer nicht beweglichen Umgebung angebracht sind.

4. Überwachungseinrichtung (100) nach einem der Ansprüche 1 bis 3, **dadurch gekennzeichnet, dass** als Schutzfeldbeeinflussung eine Änderung der Größe und/oder Form des Schutzfeldes (16, 16') vorgesehen ist.

5. Überwachungseinrichtung (100) nach einem der Ansprüche 1 bis 4, **dadurch gekennzeichnet, dass** als Schutzfeldbeeinflussung eine Schutzfeldabschaltung vorgesehen ist.

6. Überwachungseinrichtung (100) nach einem der Ansprüche 1 bis 5, **dadurch gekennzeichnet, dass** der Sensor (1) ein Sicherheitssensor ist.

7. Überwachungseinrichtung (100) nach einem der Ansprüche 1 bis 6, **dadurch gekennzeichnet, dass** der Sensor (1) ein optischer Sensor oder ein Radarsensor ist.

8. Überwachungseinrichtung (100) nach Anspruch 7, **dadurch gekennzeichnet, dass** der Sensor (1) ein Lichtvorhang oder ein Flächendistanzsensor ist.

9. Überwachungseinrichtung (100) nach einem der Ansprüche 1 bis 8, **dadurch gekennzeichnet, dass** die ersten und zweiten Sensormittel (18, 20) in Form von optischen, magnetischen, induktiven, kapazitiven Sensormitteln (18, 20) oder als Schallsensoren ausgebildet sind.

10. Überwachungseinrichtung (100) nach einem der Ansprüche 1 bis 9, **dadurch gekennzeichnet, dass** die Markierungselemente (19) eine Folge von Geometriestrukturelementen und/oder Materialstrukturelementen aufweisen, die mittels den ersten Sensormitteln (18) seriell erfasst werden.

11. Überwachungseinrichtung (100) nach Anspruch 10, **dadurch gekennzeichnet, dass** die Markierungselemente (19) und/oder die ersten Sensormittel (18) für eine Richtungserkennung der beweglichen Einheit ausgebildet sind.

12. Überwachungseinrichtung (100) nach einem der Ansprüche 3 bis 11, **dadurch gekennzeichnet, dass** die Referenzelemente (21) eine Folge von Geometriestrukturelementen und/oder Materialstrukturelementen aufweisen, die mittels den zweiten Sensormitteln (20) seriell erfasst werden.

13. Überwachungseinrichtung (100) nach Anspruch 12, **dadurch gekennzeichnet, dass** die Referenzelemente (21) und/oder die zweiten Sensormittel (20) für eine Richtungserkennung der beweglichen Einheit ausgebildet sind.

14. Überwachungseinrichtung (100) nach einem der Ansprüche 1 bis 13, **dadurch gekennzeichnet, dass** anhand von Sensorsignalen der ersten und/oder zweiten Sensormittel (18, 20) eine Fehlerkontrolle durchgeführt wird.

15. Überwachungseinrichtung (100) nach einem der Ansprüche 1 bis 14, **dadurch gekennzeichnet, dass** die ersten und/oder zweiten Sensormittel (18, 20) jeweils wenigstens zwei in Bewegungsrichtung der beweglichen Einheit hintereinander angeordnete Sensorelemente (22, 22', 24, 24') aufweisen.

16. Überwachungseinrichtung (100) nach einem der Ansprüche 1 bis 15, **dadurch gekennzeichnet, dass** die ersten und/oder zweiten Sensormittel (18, 20) pulsförmige Sensorsignale generieren.

17. Überwachungseinrichtung (100) nach einem der Ansprüche 1 bis 16, **dadurch gekennzeichnet, dass** anhand von Sensorsignalen der ersten Sensormittel (18) die Geschwindigkeit der beweglichen Einheit ermittelt wird.

18. Überwachungseinrichtung (100) nach einem der Ansprüche 1 bis 17, **dadurch gekennzeichnet, dass** die bewegliche Einheit ein Fahrzeug (13) oder ein bewegliches Teil einer Maschine ist.

19. Verfahren zum Betrieb einer Überwachungseinrichtung (100) mit einem Sensor (1), mittels dessen eine Objektüberwachung in einem Schutzfeld (16, 16') durchgeführt wird, wobei der Sensor (1) einer mittels eines Antriebs angetriebenen, beweglichen Einheit zugeordnet ist, **dadurch gekennzeichnet, dass** erste Sensormittel (18) vorgesehen sind, mittels derer eine inkrementelle Wegerfassung dadurch durchgeführt wird, indem wiederkehrend in den Erfassungsbereich der Sensormittel (18) geführte Markierungselemente (19) eines Antriebsstrangs des Antriebs detektiert werden, dass zweite Sensormittel (20) vorgesehen sind, mittels derer eine absolute Referenz für die inkrementelle Wegerfassung generiert wird, und dass abhängig von der mit den ersten und zweiten Sensormitteln (18, 20) durchgeführten Wegerfassung eine Schutzfeldbeeinflussung durchführbar ist.

## Claims

1. A monitoring device (100) having a sensor (1), by means of which object monitoring is carried out in a protective field (16, 16'), the sensor (1) being assigned to a movable unit driven by means of a drive, **characterised in that** first sensor means (18) are provided, by means of which incremental path detection is carried out thereby, by detecting marking elements (19) which are repeatedly guided into the detection range of the sensor means (18) and are fitted to a drive train of the drive, **in that** second sensor means (20) are provided, by means of which an absolute reference is generated for the incremental path detection, and **in that** a protective field can be influenced according to a path detection carried out with the first and second sensor means (18, 20).

2. A monitoring device (100) according to claim 1, **characterised in that** a drive shaft or a drive train is provided, and **in that** sensor means are provided, by means of which a speed is detected by detecting marking elements (19) on the drive shaft or on a drive train of a vehicle (13) or machine part (25) by utilising the Doppler effect and/or a distance is summed up from the measured speed.

3. A monitoring device (100) according to claim 1 or 2, **characterised in that** the absolute reference is formed **in that** reference elements (21) which are attached to a non-moving environment are detected with the second sensor means (20).

4. A monitoring device (100) according to one of claims 1 to 3, **characterised in that** a change in the size and/or shape of the protective field (16, 16') can influence the protective field.

5. A monitoring device (100) according to one of the claims 1 to 4, **characterised in that** a protective field switch-off can influence the protective field.

6. A monitoring device (100) according to one of claims 1 to 5, **characterised in that** the sensor (1) is a safety sensor.

7. A monitoring device (100) according to one of claims 1 to 6, **characterised in that** the sensor (1) is an optical sensor or a radar sensor.

8. A monitoring device (100) according to claim 7, **characterised in that** the sensor (1) is a light curtain or an area distance sensor.

9. A monitoring device (100) according to one of the claims 1 to 8, **characterized in that** the first and second sensor means (18, 20) are designed in the form of optical, magnetic, inductive, capacitive sensor means (18, 20) or as sound sensors.

10. A monitoring device (100) according to one of claims 1 to 9, **characterised in that** the marking elements (19) have a sequence of geometric structure elements and/or material structure elements which are detected serially by means of the first sensor means (18).

11. A monitoring device (100) according to claim 10, **characterised in that** the marking elements (19) and/or the first sensor means (18) are designed for directional detection of the movable unit.

12. A monitoring device (100) according to one of the claims 3 to 11, **characterised in that** the reference elements (21) have a sequence of geometric structure elements and/or material structure elements which are detected serially by means of the second sensor means (20).

13. A monitoring device (100) according to claim 12, **characterised in that** the reference elements (21) and/or the second sensor means (20) are designed for directional detection of the movable unit.

14. A monitoring device (100) according to one of claims 1 to 13, **characterised in that** an error check is carried out on the basis of sensor signals of the first and/or second sensor means (18, 20).

15. A monitoring device (100) according to one of claims 1 to 14, **characterised in that** the first and/or second sensor means (18, 20) each have at least two sensor elements (22, 22', 24, 24') arranged one behind the other in the direction of movement of the movable unit.

16. A monitoring device (100) according to one of claims 1 to 15, **characterised in that** the first and/or second sensor means (18, 20) generate pulse-shaped sensor signals.

17. A monitoring device (100) according to one of claims 1 to 16, **characterised in that** the speed of the movable unit is determined on the basis of sensor signals from the first sensor means (18).

18. A monitoring device (100) according to one of claims 1 to 17, **characterised in that** the movable unit is a vehicle (13) or a movable part of a machine.

19. A method for operating a monitoring device (100) having a sensor (1), by means of which object monitoring is carried out in a protective field (16, 16'), the sensor (1) being assigned to a movable unit driven by means of a drive, **characterized in that** first sensor means (18) are provided, by means of which incremental path detection is carried out thereby, by detecting marking elements (19) of a drive train of the drive which are repeatedly guided into the detection range of the sensor means (18), **in that** second sensor means (20) are provided, by means of which an absolute reference is generated for the incremental path detection, and **in that** the protective field can be influenced according to a path detection carried out with the first and second sensor means (18, 20).

## Revendications

1. Dispositif de surveillance (100) muni d'un capteur (1), au moyen duquel une surveillance d'objets est effectuée dans un champ de protection (16, 16'), le capteur (1) étant associé à une unité mobile entraînée au moyen d'un entraînement, **caractérisé en ce que** des premiers moyens de détection (18) sont prévus, au moyen desquels une détection incrémentielle de la trajectoire est effectuée, par la détection d'éléments de marquage (19) guidés de manière répétée dans la zone de détection des moyens de détection (18) et montés sur un train d'entraînement dudit système d'entraînement, **en ce que** des seconds moyens de détection (20) sont prévus, au moyen desquels une référence absolue est générée pour la détection incrémentale de trajectoire, et **en ce que** le champ de protection peut être influencé en fonction de la détection de trajectoire effectuée avec les premiers et seconds moyens de détection (18, 20).

2. Dispositif de surveillance (100) selon la revendication 1, **caractérisé en ce qu'**il est prévu un arbre d'entraînement ou un train d'entraînement, et **en ce qu'**il est prévu des moyens de détection au moyen desquels une vitesse est détectée en détectant des éléments de marquage (19) sur l'arbre d'entraînement ou sur un train d'entraînement d'un véhicule (13) ou d'une partie de machine (25) en utilisant l'effet Doppler et/ou une distance est additionnée à partir de la vitesse mesurée.

3. Dispositif de surveillance (100) selon la revendication 1 ou 2, **caractérisé en ce que** la référence absolue est formée lorsque des éléments de référence (21) qui sont fixés à un environnement non mobile sont détectés avec le second moyen de détection (20).

4. Dispositif de surveillance (100) selon l'une des revendications 1 à 3, **caractérisé en ce qu'**une modification de la taille et/ou de la forme du champ de protection (16, 16') pemet d'influencer le champ de protection.

5. Dispositif de surveillance (100) selon l'une des revendications 1 à 4, **caractérisé en ce qu'**une coupure du champ de protection permet d'influencer le champ de protection.

6. Dispositif de surveillance (100) selon l'une des revendications 1 à 5, **caractérisé en ce que** le capteur (1) est un capteur de sécurité.

7. Dispositif de surveillance (100) selon l'une des revendications 1 à 6, **caractérisé en ce que** le capteur (1) est un capteur optique ou un capteur radar.

8. Dispositif de surveillance (100) selon la revendication 7, **caractérisé en ce que** le capteur (1) est un rideau lumineux ou un capteur de distance surfacique.

9. Dispositif de surveillance (100) selon l'une des revendications 1 à 8, **caractérisé en ce que** le premier et le second moyen de détection (18, 20) sont conçus sous la forme de moyens de détection optiques, magnétiques, inductifs, capacitifs (18, 20) ou comme des capteurs sonores.

10. Dispositif de surveillance (100) selon l'une des revendications 1 à 9, **caractérisé en ce que** les éléments de marquage (19) présentent une séquence d'éléments de structure géométrique et/ou d'éléments de structure de matériau qui sont détectés en série au moyen des premiers moyens de détection (18).

11. Dispositif de surveillance (100) selon la revendication 10, **caractérisé en ce que** les éléments de marquage (19) et/ou les premiers moyens de détection (18) sont conçus pour une détection directionnelle de l'unité mobile.

12. Dispositif de surveillance (100) selon l'une des revendications 3 à 11, **caractérisé en ce que** les éléments de référence (21) présentent une séquence d'éléments de structure géométrique et/ou d'éléments de structure de matériau qui sont détectés en série au moyen des seconds moyens de détection (20).

13. Dispositif de surveillance (100) selon la revendication 12, **caractérisé en ce que** les éléments de référence (21) et/ou les seconds moyens de détection (20) sont conçus pour une détection directionnelle de l'unité mobile.

14. Dispositif de surveillance (100) selon l'une des revendications 1 à 13, **caractérisé en ce qu'**un contrôle d'erreur est effectué sur la base de signaux de capteurs du premier et/ou du second moyen de détection (18, 20).

15. Dispositif de surveillance (100) selon l'une des revendications 1 à 14, **caractérisé en ce que** les premiers et/ou seconds moyens de détection (18, 20) présentent chacun au moins deux éléments de détection (22, 22', 24, 24') disposés l'un derrière l'autre dans la direction de déplacement de l'unité mobile.

16. Dispositif de surveillance (100) selon l'une des revendications 1 à 15, **caractérisé en ce que** le premier et/ou le second moyen de détection (18, 20) génèrent des signaux de détection en forme d'impulsion.

17. Dispositif de surveillance (100) selon l'une des revendications 1 à 16, **caractérisé en ce que** la vitesse de l'unité mobile est déterminée sur la base des signaux de capteur provenant des premiers moyens de capteur (18).

18. Dispositif de surveillance (100) selon l'une des revendications 1 à 17, **caractérisé en ce que** l'unité mobile est un véhicule (13) ou une partie mobile d'une machine.

19. Procédé d'exploitation d'un dispositif de surveillance (100) comportant un capteur (1), au moyen duquel une surveillance d'objet est effectuée dans un champ de protection (16, 16'), le capteur (1) étant associé à une unité mobile entraînée au moyen d'un entraînement, **caractérisé en ce que** des premiers moyens de détection (18) sont prévus, au moyen desquels une détection incrémentielle de trajectoire est effectuée, par la détection d'éléments de marquage (19) d'une ligne d'entraînement de l'entraînement, qui sont guidés de manière répétée dans la zone de détection des moyens de détection (18), **en ce que** des seconds moyens de détection (20) sont prévus, au moyen desquels une référence absolue est générée pour la détection incrémentale de la trajectoire, et **en ce que** le champ de protection peut être influencé en fonction de la détection de la trajectoire effectuée avec les premiers et seconds moyens de détection (18, 20).
